# EUROPEAN PATENT APPLICATION

(11) **EP 1 574 942 A1**
(43) Date of publication of application: **14.09.2005**
(21) Application number: 03780817.7
(22) Date of filing: 17.12.2003
(51) Int. Cl.: G06F 3/12, B41J 29/00

(54) **PRINT CONTROL DEVICE AND PRINT CONTROL METHOD**

(30) Priority: 19.12.2002 JP 2002367978
(71) Applicant: MATSUSHITA ELECTRIC INDUSTRIAL CO., LTD., Osaka 571-8501 (JP)
(72) Inventor: KAMEI, Tatsuo, Suita-shi, Osaka 564-0023 (JP)
(74) Representative: Pautex Schneider, Nicole Véronique
(86) International application number: PCT/JP2003/016148
(87) International publication number: WO 2004/057457

(57) **Abstract**

The print control apparatus 100 that reduces the time needed for searching files includes a division unit 101a that obtains the print data 401 from outside the print control apparatus 100 and divides it into division files 104a, a storage unit 104 that has an area for storing the division files 104a, an R/W unit 101b that writes the division files 104a obtained by the division unit 101a in the storage unit 104 and a file management unit 101c that hierarchizes and manages the plural division files 104a to be written in the storage unit 104 by the R/W unit 101b, and searches division files 104a based on the layers in a hierarchy.

## Description

### Technical Field

The present invention relates to a print control apparatus included in, for example, a printer, especially relates to a print control apparatus that stores print data obtained from a host computer and performs printing using the stored print data with no need to reobtain the print data.

### Background Art

In general, a printer has a printer engine that performs printing based on the print data and a print control apparatus that controls the printer engine.

The print control apparatus like this obtains the print data whose contents show a text, a figure and the like to be printed from an external host computer and temporally stores the print data. After that, the print control apparatus reads the print data stored in a memory, causes its printer engine to print the contents shown by the print data and executes print processing such as erasing the print data used in the printing after completing the printing.

Also, in the print control apparatus, a file management method that is compatible with Windows (a trademark of the Microsoft Corporation) of Microsoft Corporation is used in storing the above-mentioned print data with a view of universal use and maintainability. A management table called FAT (FileAllocationTable) is used as a file management method like this.

In other words, on obtaining a large number of print data from a host computer at one time, the print control apparatus temporally stores these print data using the above-mentioned FAT. After that, the print control apparatus searches the stored print data in an obtainment order using the FAT and execute printing processing based on the searched print data.

However, the above-mentioned print control apparatus has a problem: in the case where the number of print data to be stored (the number of files) increases, the FAT size becomes larger. This lengthen the time needed for searching and reading the file, resulting in affecting its userfriendliness.

Also, this problem is remarkable in a print control apparatus that has a memory print function.

The print control apparatus with a memory print function has a memory of large capacity. Several print data that are to be used in printing are written in the memory of large capacity (for example, refer to Japanese Laid-Open Patent No. 5-27929 publication, Japanese Laid-Open Patent No. 9-240070 publication and Japanese Laid-Open Patent No. 11-191041 publication). As a result, the print control apparatus like this can execute printing processing in a short time omitting the time needed for transmitting or expanding data from a host computer, but it requires more time for searching the print data or its file as the number of print data stored in a memory of large capacity increases.

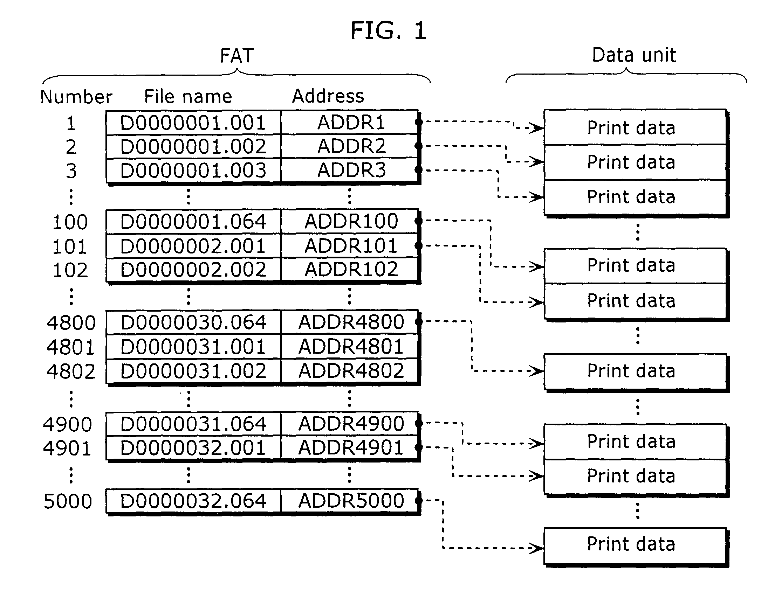

FIG. 1 is an illustration for explaining a problem in the above-mentioned conventional print control apparatus.

For example, as shown in FIG. 1, the print control apparatus sets the file names of the respective print data and their addresses in the FAT when storing 5000 pieces of print data in a memory of large capacity. For example, here, in the case where the print control apparatus searches one print data from the stored 5000 pieces of print data and executes printing based on the print data, the average search times amounts to 2500.5 in the above search. The average search time is obtained from [average search times] = (the number of data+1)/2 in the case where the predetermined print data is obtained from plural print data in a linear search (the search performed starting from the head).

Further, in the case where the print control apparatus searches 100 pieces of print data and executes printing based on the print data, the average search times amounts to 2500.5 × 100=250050 in the above search.

In other words, in the above conventional print control apparatus, it takes time for searching a file in this way.

Therefore, the present invention is considered in order to solve the above problem, and an object of the present invention is to provide a print control apparatus and a print control method with an improved userfriendliness reducing the time needed for searching a file to be printed.

### Disclosure of Invention

In order to achieve the above object, the print control apparatus, concerning the present invention, for controlling a printer engine prints a content based on a file indicating the content to be printed, includes: a storage unit that has an area for storing the file; a writing unit that writes the file in the storage unit; and a file management unit that hierarchizes files to be written by the writing unit in the storage unit, that manages files in a hierarchical form, and that searches the file based on a resulting hierarchy.

In this way, plural files written in a storage unit are managed in a hierarchical structure. In searching a file, the search is performed based on the hierarchy, which enables further reducing the average search times than in the case of not based on a hierarchy, in other words, enables reducing the time needed for searching a file. As the result, it becomes possible to improve its userfriendliness.

Also, in a first aspect of the present invention, the print control apparatus may further include: an obtainment unit that obtains print data indicating the content to be printed from outside the print control apparatus; and a division unit that divides the print data obtained by the obtainment unit into the files, in the apparatus, the writing unit writes the files divided by the division unit in the storage unit.

For example, the division unit divides the print data page by page and generates a file including information equivalent to each page.

In this way, the print data is written in a storage unit in a way that it is divided into plural files. Therefore, in the case where a problem is generated on a part of the print data, only the file that corresponds to the part is affected by the problem and no other files are affected, which enables causing a printer engine to print the contents included in other files, and thus it becomes possible to avoid restricting the print range of the contents included in the print data. For example, it is possible to print pages except the page including a part where a problem is generated, and it is possible to eliminate the possibility of printing pages after the page that corresponds to the part.

Also, in a second aspect of the present invention, in the print control apparatus, the file management unit may divide the files to be written in the storage unit into two layers in a hierarchy and may manage the files in a hierarchical form by setting one storage area for one print data in the storage unit and by causing said writing unit to write, in the storage area, the files generated from the print data.

In this way, as plural files divided from each print data are written in the storage area corresponding to each of the print data when plural print data are obtained, it is possible to reduce the number of files to be searched by finding the storage area corresponding to the print data first when searching all the plural files composing of a predetermined one print data, and thus it is possible to reduce the average search times for searching all target files.

Here, in a second aspect of the present invention, in the print control apparatus, the file management unit may selectively use, depending on print data obtained by the obtainment unit, a first management form for hierarchizing and managing the files, and a second management form for hierarchizing and managing the files in a way different from the first management form.

For example, the file management unit selectively uses a management form that divides the plural files into two layers in a hierarchy as the first management form and a management form that divides the plural files into three layers in a hierarchy as the second management form.

In this way, the first management form and the second management form are selectively used depending on the print data to be obtained, which enables appropriately reducing the average search times for each print data.

Also, the file management unit may manage the plural files to be written in the storage unit by dividing the files into two layers in a hierarchy, by setting a storage area in the storage unit user by user and causing the writing unit to write the file obtained by the obtainment unit in the storage area of a user who generated the file.

In this way, a storage area is set user by user, which enables further improving the userfriendliness.

Note that the present invention can be realized as a print control method executed by the above-mentioned print control apparatus, a program for causing a computer to execute the program, a storage medium for storing the program and a printer with the print control apparatus.

### Brief Description of Drawings

FIG. 1 is an illustration for explaining a problem in a conventional print control apparatus.
FIG. 2 is a structural diagram showing the structure of the printing system in an embodiment of the present invention.
FIG. 3 is a block diagram showing the inner structure of the printer.
FIG. 4 is an illustration for explaining the management method of the division file.
FIG. 5 is a flow chart showing how the above control unit performs the operation of writing the print data into the storage unit.
FIG. 6 is an illustration for explaining the management method of the division file of the file management unit concerning the above variation 1.
FIG. 7 is a flow chart showing how the control unit concerning the above variation 1 performs the operation of writing the print data into a storage unit.
FIG. 8 is a flow chart showing how the file management unit concerning the above variation 3 performs the operation of restricting the total number of the print data.
FIG. 9 is a flow chart showing how the file management unit concerning the above variation 4 performs the operation of restricting the total number of storage areas.

### Best Mode for Carrying Out the Invention

The print control apparatus in the embodiment of the present invention will be explained below with reference to figures.

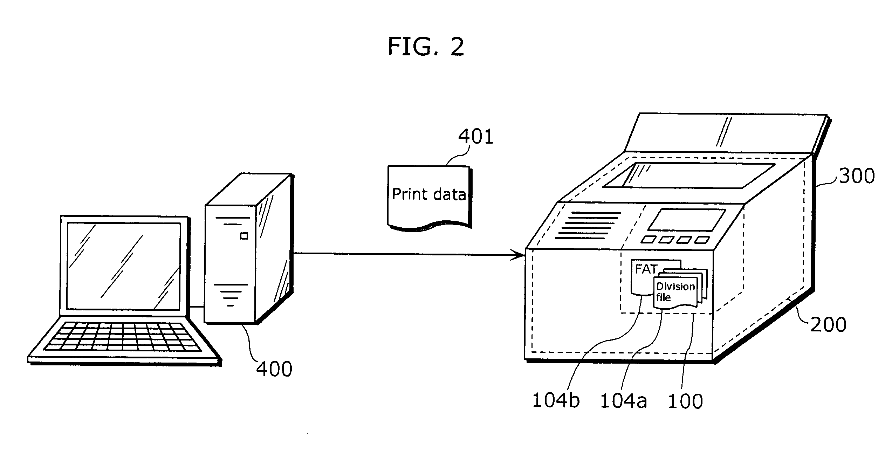

FIG. 2 is a structural diagram showing the structure of the printing system in the embodiment of the present invention.

The printing system includes a host computer 400 that generates and outputs the print data 401 showing the print contents such as a text and a figure and a printer 300 that obtains the print data 401 from the host computer 400 and prints the print contents shown in the print data 401.

The host computer 400 displays the memory inquiry display screen for inquiring a user of whether the print data 401 should be stored in the printer 300 or not before outputting the print data 401 to the printer 300. After that, the host computer 400 outputs a memory execution signal showing the indication description along with the print data 401 to the printer 300 in response to a user operation at the time when it receives an instruction of causing the printer 300 to store the print data 401.

The printer 300 includes a printer engine 200 that performs printing based on the print data 401 and a print control apparatus 100 that controls the printer engine 200.

The printer 300 in the embodiment like this has a so-called memory print function and stores several print data 401 to be used in printing. With the memory print function like this, the printer 300 omits the time needed for transmitting and expanding data from the host computer 400 and executes the printing processing in a short time.

The print control apparatus 100 in the embodiment, in the case where it obtains the print data 401 and the memory execution signal from the host computer 400, it does not handle the print data 401 as one file but stores it by dividing it into plural division files 104a. Also, the print control apparatus 100 manages the division files 104a stored in this way using a FAT 104b. After that, the print control apparatus 100 outputs these division files 104a to the printer engine 200, causes it to not only print the print contents included in the print data 401, but also store these division files 104a without erasing them so as to enable printing based on the print data 401 immediately and again.

Also, the print control apparatus 100, in the case where it obtains not the memory execution signal but the print data 401 from the host computer 400, temporally stores the files by dividing the print data 401 into plural division files 104a like the case mentioned above. After that, the print control apparatus 100 outputs these division files 104a to the printer engine 200, and erases these division files 104a after causing it to print the print contents included in these print data 401.

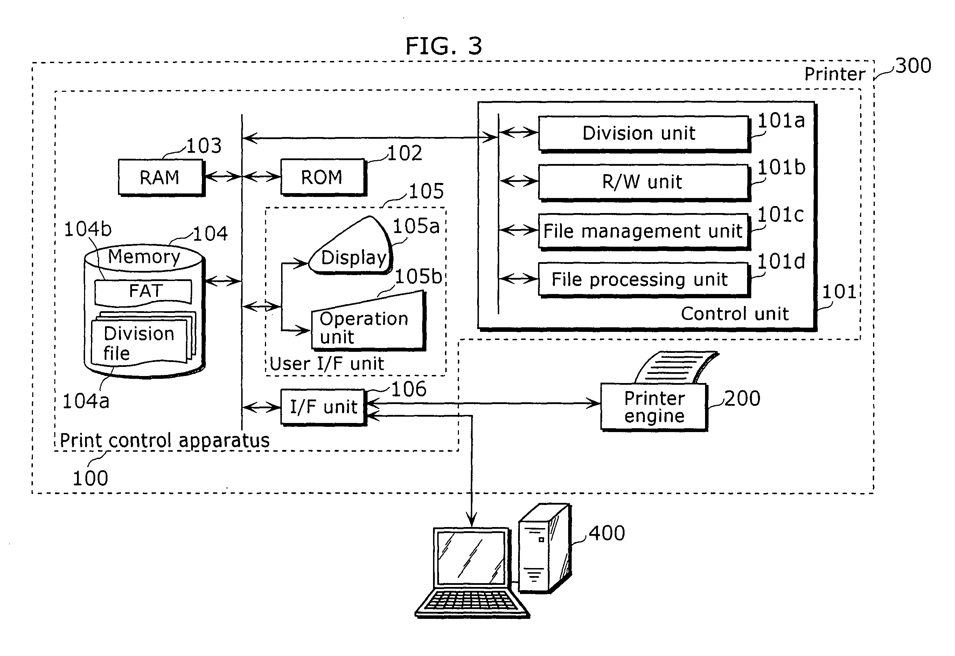

FIG. 3 is a block diagram showing the inner structure of the printer 300.

The print control apparatus 100 of the printer 300 includes a control unit 101 composed of a Central Processing Unit (CPU) and the like, a Read Only Memory (ROM) 102 that previously stores a program for print control executed by the control unit 101, a Random Access Memory (RAM) for enabling the control unit 101 to temporally store the data and read the data, a storage unit 104 that has an area for storing the division files 104a and the FAT 104b mentioned above, a user I/F unit 105 that interfaces between the user and the control unit 101, and an I/F unit 106 that interfaces between an external apparatus of the print control apparatus 100 and the control unit 101.

The user I/F unit 105 includes a display unit 105a that has, for example, a liquid display screen for displaying operational descriptions of the printer 300 or its setting descriptions and an operation unit 105b that has operation buttons used by the user.

The storage unit 104 is a memory of large capacity that enables storing information of comparatively large capacity, and composed of a hard disc drive or a non-volatile semiconductor memory. Note that it may structure a storage unit 104 in a drive that has a DVD, a CD, an MO and the like.

The control unit 101 in the embodiment includes a division unit 101a that divides the print data 401 into plural division files 104a, an R/W unit 101b that is a read/write unit for writing or reading the division files 104a in or from the storage unit 104, a file management unit 101c that manages the division file 104a to be written in the storage unit 104 using the FAT 104b and searches these division files 104a, and a file processing unit 101d that causes the R/W unit 101b to read the division files 104a searched by the file management unit 101c from the storage unit 104 and output these division files 104a to the printer engine 200.

The division unit 101a, on obtaining the print data 401 from the host computer 400 via the I/F unit 106, divides the print data 401, for example, page by page and generates data included in each of the pages as one division file 104a. In other words, the division unit 101a in the embodiment functions as an obtainment unit and a division unit. For example, the division unit 101a makes data included in the first page of the print data 401 into one division file 104a and makes the data included in the second page into another division file 104a.

The file management unit 101c in the embodiment sets the storage area corresponding to the print data 401 obtained by the division unit 101a by using the FAT 104b and causes the R/W unit 101b to write all the division files 104a divided from the print data 401 in the storage area. In this way, the file management unit 101c divides these plural division files 104a into two layers in a hierarchy and manages them.

To be more specific, the file management unit 101c stores the file name of the print data 401 and its address in the first column of the FAT 104b. Next, the file management unit 101c stores respective file names of the respective division files 104a that correspond to the print data 401 and their addresses in the position of second column of the FAT 104b shown by the address in the first column of the earlier-mentioned FAT 104b.

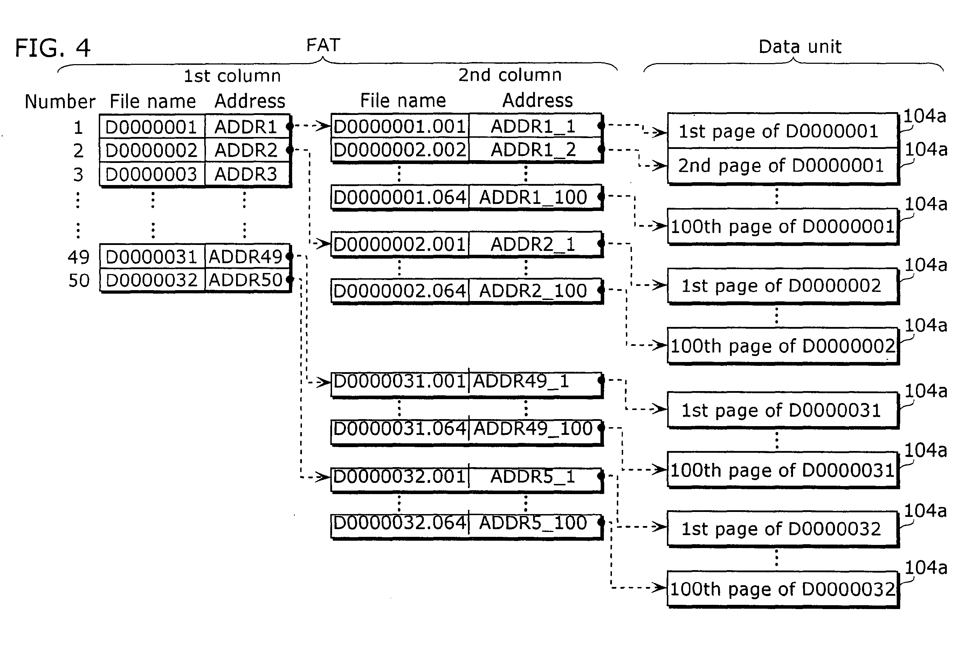

FIG. 4 is an illustration for explaining the management method of the division file 104a.

For example, in the case where each of the 50 print data 401 including data equivalent to 100 pages is sent from the host computer 400, the division unit 101a divides these print data 401 into 100 division files 104a. As the result, 50 × 100 division files 104a are stored in the storage unit 104.

In this case, the file management unit 101c stores, in the first column of the FAT 104b, the file names of the respective print data 401 and their addresses showing the storage destination of the second column of the FAT 104b, the storage destination storing the information related to these print data 401. For example, in the first column of the FAT 104b, the file name "D0000001" and its address "ADDR1" are stored and likewise, the file name "D0000002" and its address "ADDR2" are stored.

Further, the file management unit 101c stores the file name and the address of the data unit in the second column of the FAT 104b as to respective division files 104a. For example, in the second column of the FAT 104b, the file name "D0000001.001" and its address "ADDR1_1" are stored as to the division file 104a corresponding to the first page of the print data 401 of the file name "D0000001", and the file name "D0000001. 002" and its address "ADDR1_2" are stored as to the division file 104a corresponding to the second page.

With the hierarchical structure like this, all the division files 104 corresponding to one print data 401 are stored in one storage area. For example, all the division files 104a corresponding to the print data 401 of the file name "D0000001" are stored in the storage area "D0000001".

Also, with a look of the first column of the FAT 104b, it is possible to know the file name of the print data 401 stored in the storage unit 104 and the address in the second column of the FAT 104b, the second column storing the information concerning the print data 401. After that, with a look of the second column of the FAT 104b based on the address, the file name of the division file 104a corresponding to the print data 401 and its address of the data unit where the division file 104a is stored can be known. In other words, this hierarchical structure is composed of a so-called link style.

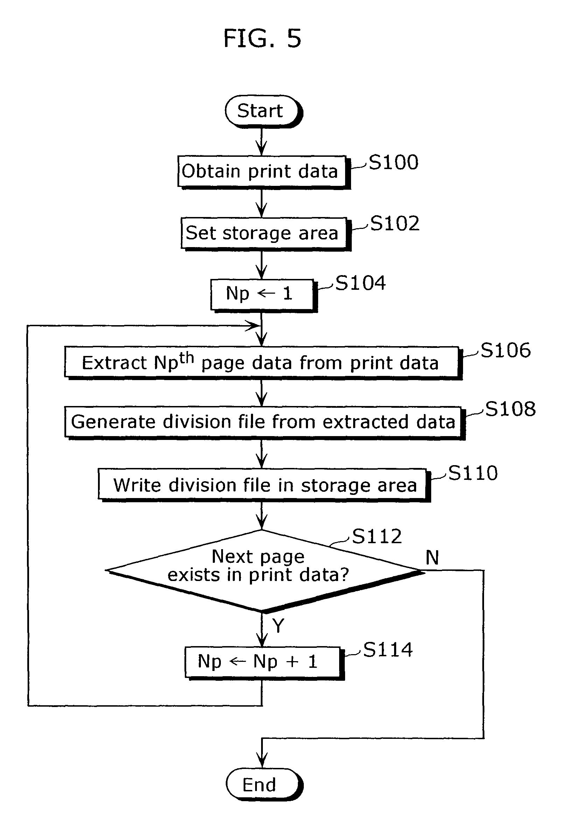

FIG. 5 is a flow chart showing how the control unit 101 performs the operation of writing the print data 401 in the storage unit 104.

First, when the division unit 101a of the control unit 101 obtains the print data 401 via the I/F unit 106 (step S100), the file management unit 101c of the control unit 101 sets the storage area for storing the print data 401 in the storage unit 104 (step S102). In other words, the file management unit 101c stores the file name of the print data 401 and its address in the first column of the FAT 104b.

Next, the division unit 101a initializes the count number Np of the installed counter to 1 (step S104), and extracts the data in the Np^{th} page from the print data 401 (step S106).

Further, the division unit 101a generates one division file 104a from the extracted Np^{th} page (step S108).

After that, the file management unit 101a causes the R/W unit 101b to write the generated division file 104a in the storage unit 104 (step S110). Here, the file management unit 101a stores the file name of the division file 104a and its address in the second column of the FAT 104b.

After that, the division unit 101a judges whether the page next to the Np page exists in the print data 401 or not (step S112). Here, in the case where it is judged that the next page exists (Y in step S112), the division unit 101a adds 1 to the count number Np so as to update this (step S114), and repeatedly executes the operation starting from step S106 again. Also, in the case where it is judged that the next page does not exist (N in step S112), the division unit 101a and the file management unit 101c finish the processing operation like mentioned above.

The print data 401 obtained from the host computer 400 are made into a form of plural hierarchized division files 104a so as to be stored in the storage unit 104 through the operation of the control unit 101 like this.

Next, the average search times at the time when the file management unit 101c searches one division file 104a from the plural division files 104a hierarchized in this way will be explained.

In a conventional example, an average search times of 2500.5 is required to search one file from 5000 files, but in this embodiment, it can be reduced to 76 times.

To be more specific, as shown in FIG. 4, the case of searching one division file 104a corresponding to the print data 401 of, for example, the file name "D0000002" in 5000 division files 104a stored in the storage unit 104 will be explained.

First, as the number of the file names of the print data 401 is 50, an average search times of (50+1)/2=25.5 times is required so that the file management unit 101c can search the file name "D0000002" of the print data 401 from the first column of the FAT 104b. Also, at the time of searching a file name from the FAT 104b in this way, the file management unit 101c compares the file names to be searched with the file names stored in the FAT 104b in an arrangement order of the files stored in the FAT 104b. Next, as there are 100 file names of the division file 104a, an average search times of (100+1)/2=50.5 is required so that the file management unit 101c can search the file name "D0000002.001" of the division file 104a corresponding to the print data 401 of the file name "D0000002" from the second column of the FAT 104b. Therefore, one division file 104a can be searched in an average search times of 25.5+50.5=76 as a whole.

Further, an average search times of 250050 is required for searching 100 files from 5000 files in a conventional example, but it can be reduced to 5075.5 times in the embodiment.

To be more specific, as shown in FIG. 4, the case of searching 100 division files 104a corresponding to the print data 401 of, for example, the file name "D0000002" in the 5000 division files 104a stored in the storage unit 104 will be explained.

First, an average search times of 25.5 is required so that the file management unit 101c can search the file name "D0000002" from the first column of the FAT 104b. Next, as the average search times at the time of searching the file name of one division file 104a corresponding to the print data 401 of the file name "D0000002" is 50.5 as mentioned above, an average search times of 50.5×100=5050 is required so that the file management unit 101c can search 100 division files 104a corresponding to the print data 401. Therefore, 100 division files 104a can be searched in an average search times of 25.5+50.5=76 as a whole.

In this way, in the embodiment, it is possible to reduce the average search times more greatly than in the conventional case even in both cases of searching one division file 104a and searching all the division files 104a corresponding to one print data 401, and thus it is possible to reduce the time needed for searching the division file 104a. As the result, it becomes possible to improve its userfriendliness.

The file processing unit 101d of the control unit 101 causes the R/W unit 101b to read the division file 104a searched by the file management unit 101c from the storage unit 104. In other words, in the case where only the print data 401 is sent, but no memory execution signal is sent, from the host computer 400, and the print data 401 is made into a plural division files 104a and temporally stored in the storage unit 101, the file processing unit 101d causes the R/W unit 101b to read all the division files 104a corresponding to the print data 401 from the storage unit 104. Also, in the case where a user operates the operation unit 105b in a way that printing is performed based on the printing data 401 previously stored in the storage unit 104 and a signal corresponding to the operation is outputted from the operation unit 105b, the file processing unit 101d causes the R/W unit 101b to read all the division files 104a corresponding to the print data 401 desired by the user from the storage unit 104.

After that, the file processing unit 101d causes the printer engine 200 to output the division file 104a read right and print the contents of the division file 104a read right among the print contents included in the print data 401.

In other words, even in the case where there emerges a problem in reading one division file 104a from plural division files 104a corresponding to the print data 401, all the print contents included in the rest of the division files 104a are printed. In other words, all the pages except the page corresponding to the division file 104a where a problem emerged are printed.

In this way, in the embodiment, there is no possibility that a problem in reading a part of the print data 401 restricts the print range greatly, and it is possible to sufficiently limit the restriction of print range by the problem.

### (Variation 1)

Here, the first variation concerning the file management method will be explained.

The file management unit 101c concerning this variation divides plural division files 104a into three layers in a hierarchy so as to manage them.

In other words, when the division unit 101a obtains the print data 401, the file management unit 101c sets the storage area corresponding to the print data 101a in the storage unit 104 and sets plural sub-storage areas in the storage area. In other words, the file management unit 101c stores the file name of the print data 401 and its address in the first column of the FAT. Next, the file management unit 101c stores the file name and its address of a set file that integrates a certain number of division files or less which is corresponding to the print data 401 in the position in the second column of the FAT shown by the address of the first column of the FAT mentioned above. Further, the file management unit 101c stores respective file names and addresses of the respective division files 104a corresponding to the set file in the third column of the FAT shown by the address in the second column of the FAT mentioned above.

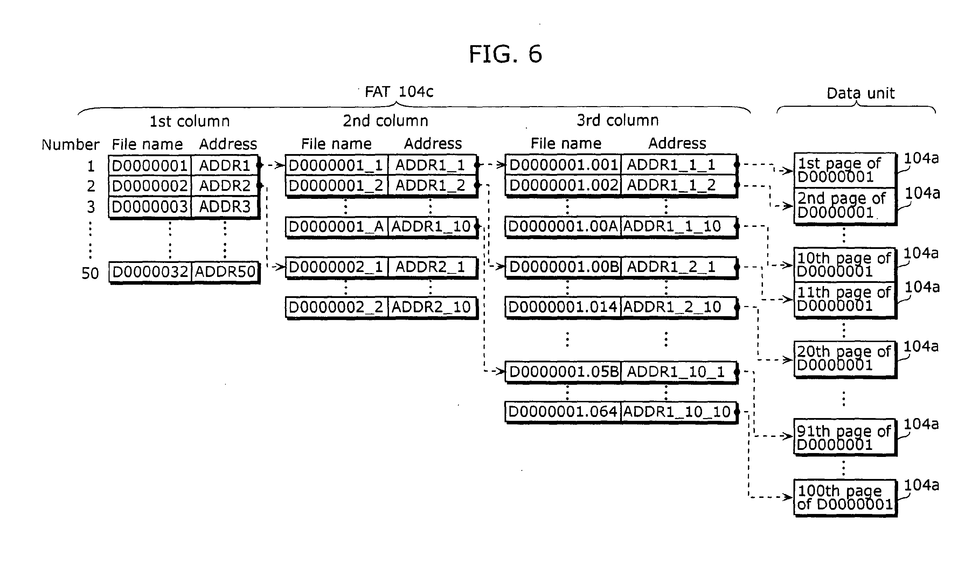

FIG. 6 is an illustration for explaining the management method of the division file 104a of the file management unit 101c concerning the variation.

For example, in the case where each of the 50 print data 401 that includes 100 page data is sent from the host computer 400, the division unit 101a divides the print data 401 into 100 division files 104a. As the result, 50 × 100 division files 104a are stored in the storage unit 104.

In this case, the file management unit 101c stores a file name of each print data 401 and an address showing the storage destination of the second column of the FAT 104c concerning the information related to these print data 401 in the first column of the FAT 104c. For example, in the first column of the FAT 104c, the file name "D0000001" and an address "ADDR1" are stored and likewise, the file name "D0000002" and an address "ADDR2" are stored.

Further, the file management unit 101c stores, in the second column of the FAT 104c, each of the names of set files that integrate 10 or less division files 104a and the address showing the storage destination of the third column of the FAT 104c concerning the information related to the set file. For example, in the second column of the FAT 104c, the file name "D0000001_1" and its address "ADDR1_1" of the set file that integrates 10 division files 104a corresponding to 1st to 10th page of the print data 401 whose file name "D0000001" are stored. Also, likewise, the file name "D0000001_2" and its address "ADDR1_2" of the set file that integrates 10 division files 104a corresponding to 11th to 20th page are stored in the second column of the FAT 104c.

Also, further, the file management unit 101c stores a file name and the data part address of each division file 104a composing a set file will be stored in the third column of the FAT 104c. For example, the file name "D0000001.001" and its address "ADDR1_1_1" of the division file 104a corresponding to the first set file whose file name is "D0000001-1" are stored in the third column of the FAT 104c, and likewise, the file name "D0000001.002" and its address "ADDR1_1_2" of the division file 104a corresponding to the second division file 104a are stored.

In the hierarchical structure like this, all the division files 104 corresponding to one print data 401 are stored in one storage area. Further, a storage area includes plural sub-storage areas, and all the above division files 104 are divided and stored in the respective sub-storage areas. For example, all the division files 104a corresponding to the print data 401 whose file name is "D0000001" is stored in the storage area "D0000001", but these division files 104a are further divided for every 10 files and then each of the divided 10 files is stored in the sub-storage area of "D0000001_1", the sub-storage area of "D0000001_2" and the like.

Also, with a look of the first column of the FAT 104c, it is possible to know the file name of the print data 401 stored in the storage unit 104 and the address in the second column of the FAT 104c, the second column storing the information concerning the print data 401. After that, with a look of the second column of the FAT 104c based on the address, the file name of the set file corresponding to the print data 401 and its address of third column of the FAT 104c where the information related to the set file is stored can be known, and further, with a look of the third column of the FAT 104c based on the address, the data part address where the division file 104a corresponding to the set file is stored can be known.

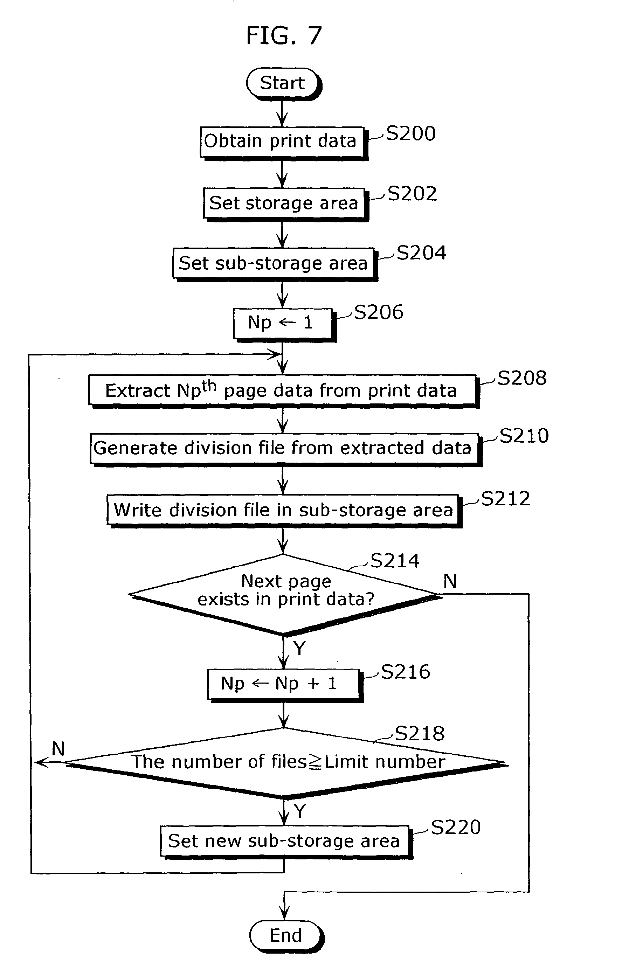

FIG. 7 is a flow chart showing how the control unit 101 performs the operation of writing the print data 401 in the storage unit 104.

First, when the division unit 101a of the control unit 101 obtains the print data 401 via the I/F unit 106 (step S200), the file management unit 101c of the control unit 101 sets the storage area for storing the print data 401 in the storage unit 104 (step S202). In other words, the file management unit 101c stores the file name of the print data 401 and its address in the first column of the FAT 104c. Further, the file management unit 101c sets the sub-storage area for storing the set file in the storage unit 104 (step S204). In other words, the file management unit 101c stores the file name of the set file and its address in the second column of the FAT 104c.

Next, the division unit 101a initializes the count number Np of the counter to be installed to 1 (step S206) and extracts Np^{th} page data from the print data 401 (step S208).

Further, the division unit 101a generates one division file 104a from the extracted Np^{th} page data (step S210).

After that, the file management unit 101a causes the R/W unit 101b to write the generated division file 104a in the sub-storage area of the storage part 104 (step S212). Here, the file management unit 101a stores the file name and address of the division file 104a in the third column of the FAT 104c.

After that, the division unit 101a judges whether the page next to the Np^{th} page exists in the print data 401 or not (step S214). Here, in the case where it is judged that the next page exists (Y in step S214), the division unit 101a adds 1 to the count number Np so as to update this (step S216). On the other hand, in the case where the division unit 101a judges that the next page does not exist (N in step S214), the control unit 101 finishes the processing like mentioned above.

When the count number Np is updated in the step S216, the file management unit 101c judges whether the number of files of the division files 104a written in the sub-storage area is equal to or exceeds its upper limit or not (step S218). For example, the upper limit of files in the sub-storage area is 10. Here, in the case where the file management unit 101c judges that the number of files is under the upper limit (N in step S218), the control unit 101 repeatedly executes the operation starting from the step S208. Also, in the case where the file management unit 101c judges that the number of files is equal to or exceeds the upper limit (Y in step S218), the file management unit 101c sets a new sub-storage area (step S220). In other words, the file management unit 101a stores the file name and the address of a new set file in the second column of the FAT 104c.

After that, when a new sub-storage area is set in step S220, the control unit 101 repeatedly executes the operation starting from the step S208 again.

Next, the average search times at the time when the file management unit 101c searches one division file 104a from plural division files 104a that are hierarchized in this way will be explained.

In the conventional example, an average search times of 2500. 5 is required to search one file from 5000 files, but in this embodiment, it can be reduced to 36.5 times.

To be more specific, as shown in FIG. 6, the case of searching one division file 104a corresponding to the print data 401 of, for example, the file name "D0000001" in 5000 division files 104a stored in the storage unit 104.

First, as the number of the file names of the print data 401 is 50, (50+1)/2=25.5 times is required as an average search times so that the file management unit 101c can search the file name "D0000001" of the print data 401 from the first column of the FAT 104c. Next, in order to search the file name "D0000001" of a set file corresponding to the print data 401 whose file name is "D0000001" from the second column of the FAT 104c, (10+1)/2=5.5 times is required as an average search times because the number of set file names is 10. Further, in order to search a file name "D0000001.001" of the division file 104a corresponding to the set file whose file name is "D0000001_1" from the third column of the FAT 104c, (10+1)/2=5.5 times is required as an average search times because the number of the file names of the division files 104a is 10. Therefore, one division file 104a can be searched in an average search times of 25.5+5.5+5.5=36.5 as a whole.

Further, an average search times of 250050 is required for searching 100 files from 5000 files in a conventional example, but it can be reduced to 630.5 times in the embodiment.

To be more specific, as shown in FIG. 6, the case of searching 100 division files 104a corresponding to the print data 401 of, for example, file name "D0000001" in the 5000 division files 104a stored in the storage unit 104 will be explained.

First, as mentioned above, 25.5 times is required as an average search times so that the file management unit 101c can search the file name "D0000001" from the first column of the FAT 104c.

Next, as the average search times at the time of searching the file name of one set file corresponding to the print data 401 of the file name "D0000001" from the second column of the FAT 104c is 5.5 times as mentioned above, 5.5 × 10=55 times is required as an average search times so that the file management unit 101c can search file names of 10 set files corresponding to the print data 401.

Further, an average search times at the time of searching a file name of one division file 104a corresponding to a set file whose file name is, for example, "D0000001_1" from the third column of the FAT 104c is 5.5 times like mentioned above. Therefore, in order to search the file names of the 10 division files 104a corresponding to the set file, 5.5 × 10=55 times is required as an average search times. The search like this needs to be respectively performed on the 10 set files corresponding to the print data 401, 55 × 10=550 times is required as an average search times.

Therefore, 100 division files 104a can be searched in an average search times of 25.5+55+550=630.5 as a whole.

In this way, in this variation, even in both cases of searching one division file 104a and searching all the division files 104a corresponding to one print data 401, and thus it is possible to reduce an average search times more greatly than in the conventional case and reduce the time needed for searching the division file 104a. As the result, it becomes possible to improve its userfriendliness.

### (Variation 2)

Here, the second variation concerning the file management method will be explained.

The file management unit 101c concerning the variation selectively uses different management forms depending on the number of pages or the number of divisions of the printed data 401.

For example, as mentioned above, the file management unit 101c selectively uses the first management form that manages the division file 104a by dividing it into two layers in a hierarchy, the second management form that manages the division file 104a by determining the upper limit of the sub-storage area as 5 and by dividing it into three layers in a hierarchy, and the third management form that manages the division file 104a by determining the upper limit of the sub-storage area as 10 and by dividing it into three layers in a hierarchy depending on the number of pages of the print data 401.

In other words, the file management unit 101c specifies the number of division files 104a that is divided and generated from one print data 401 by the division unit 101a and selects the management form with which an average search times becomes smallest among the first management form, the second management form and the third management form depending on the specified number. After that, the file management unit 101c manages the above-mentioned division file 104a using the selected management form.

For example, in the case where the print data 401 sent from the host computer 400 is made of 5 pages, the file management unit 101c manages five division files 104a of the print data 401 using the first management form with which the average search times becomes smallest. In other words, in the case where the five division files 104a like these are managed using the second management form and the third management form, the average search times needed for searching all the division files 104a from one print data 401 becomes greater.

Also, in the case where the print data 401 sent from the host computer 400 is made of 100 pages, the file management unit 101c manages 100 division files 104a of the print data 401 using the second management form with which the average search times becomes smallest.

Further, in the case where the print data 401 sent from the host computer 400 is made of 200 pages, the file management 101c manages the 200 division files 104a of the print data using the third management form with which the average search times becomes smallest.

In this way, the management forms are selectively used depending on the number of pages of the respective print data 401 sent from the host computer 400 in the embodiment, which enables reducing the number of average searching times for each print data 401.

### (Variation 3)

Here, the third variation concerning the file management method will be explained.

The file management unit 101c concerning this embodiment prohibits a predetermined number of or more print data 401 from being written in the storage unit 104. In other words, the total number of print data 401 written in the storage unit 104 is restricted in this variation.

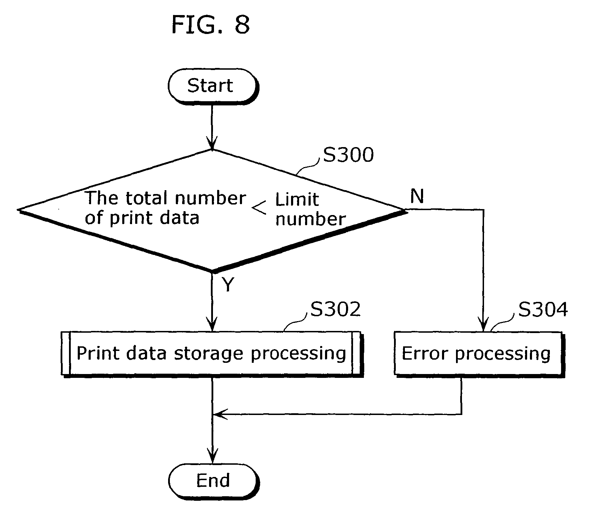

FIG. 8 is a flow chart showing how the file control management unit 101c performs the operation of restricting the total number of print data 401.

The file management unit 101c, when the print data 401 is sent from the host computer 400, specifies the total number of the print data 401 stored in the storage unit 104 and judges whether the total number of the print data 401 is under the predetermined upper limit or not (step S300).

Here, in the case where the file management unit 101c judges that it is under the upper limit (Y in step S300), it executes the operation of step S100 to step S114 shown in FIG. 5 together with the division unit 101a and performs the processing of storing the sent print data 401 (step S302). Also, in the case where the file management unit 101c judges that it is not under the upper limit (N in step S300), the file management unit 101c performs error processing on the sent print data 401 (step S304). In other words, the file management unit 101c does not execute the operation of step S100 to S114 shown in FIG. 5 together with the division unit 101a and disables writing in the storage unit 104. Further, the file management unit 101c causes the display unit 105a to display the message indicating that the sent print data 401 cannot be stored.

In this way, the total number of print data 401 stored in the storage unit 104 is restricted in this variation, which enables reducing the number of the average search times and reducing the time for searching.

### (Variation 4)

Here, the fourth variation concerning the file management method will be explained.

The file management unit 101c concerning this variation disables the setting of a predetermined number of or more storage areas in the storage unit 104. In other words, in this variation, the total number of storage areas to be set in the storage unit 104 is restricted. Also, the number of print data 401 stored in the storage area in this variation is restricted to a predetermined number or less (such as 1).

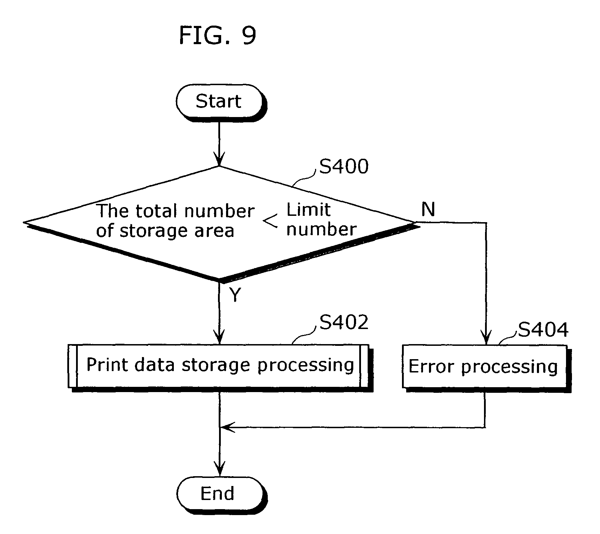

FIG. 9 is a flow chart showing how the file management unit 101c performs the operation of restricting the total number of storage areas.

The file management unit 101c specifies the total number of storage areas that have already been set when trying to set the storage areas in step S102 in FIG. 5, and judges whether the total number of storage areas is under the predetermined upper limit or not (step S400).

Here, the file management unit 101c, in the case where it judges that it is under the upper limit (Y in step S400), performs the processing of storing the print data 401 sent from the host computer 400 by performing the operation of step S102 to S114 shown in FIG. 5 together with the division unit 101a (step S402). Also, in the case where it judges that it is under the upper limit (N in step S400), the file management unit 101c performs error processing on the sent print data 401 (step S404). In other words, the file management unit 101c disables the setting of the storage areas. Further, the file management unit 101c causes the display unit 105a to display the message indicating that the sent print data 401 cannot be stored.

In this way, the total number of the print data 401 to be stored in the storage unit 104 is restricted by imposing a restriction on the total number of the storage areas, which enables reducing the number of average search times in this variation like in the variation 3. As the result, it is possible to reduce the search time and improve its userfriendliness.

Up to this point, the print control apparatus concerning the present invention has already been explained with reference to an embodiment and variations 1 to 4, but the present invention is not limited to them.

For example, in the embodiment and the variations 1 to 4, the division unit 101a generates the division file 104a by dividing the print data 401 on a page-by-page basis, but it is possible to generate data included in the respective areas as respective one of division files 104a by dividing it on an area-by-area basis, the area being smaller than unit than a page.

Further, in the embodiment and the variations 1 to 4, the print control apparatus 100 has a memory print function, but the present invention can be realized even in the case where it does not have any memory print function. Also, as to the memory print function, it has already been explained that the print data 401 used in printing is stored in the storage unit 104 with a view of the use in later-printing in a form of a division file 104a without being erased, but the print data 401 that has not been printed yet may be stored with a view of the use in later-printing. In this case, the host computer 400, when sending the print data 401, outputs the above-mentioned memory execution signal and the print reserve signal disabling the prompt execution of the printing based on the print data 401.

The control unit 101 of the print control apparatus 100 that obtained a print reserve signal like this generates division files 104a and writes them in the storage unit 104 without executing a prompt printing processing based on the print data 401 obtained from the host computer 400.

Also, in the embodiment and the variations 1 to 4, the storage areas are set for each print data 401, but the storage areas may be set for each user. In this case, the print data 400 sent from the host computer 400 is written in a storage area of a user who generated the print data 400 as plural division files 104a. In other words, the plural print data 400 generated by the same user is written in the same storage area. In this way, it becomes possible to improve its userfriendliness.

Further, the first management form, the second management form and the third management form that have been previously prepared are selectively used in the variation 2, but the optimum management form may be selected depending on the obtained print data 401 and the print data 401 may be managed using the management form. Also, management forms vary depending on the number of divisions of the print data 401 in the variation 2, but the management forms may vary depending on user specifications. In other words, the user inputs a desirable management form by operating the operation unit 105b. In response to the input of the management form, the operation unit 105b outputs the signal notifying the management form to the file management unit 101c of the control unit 101. The file management unit 101c specifies the management form desired by the user by obtaining the signal and manages the print data 401 using the management form. In this way, it becomes possible to improve the userfriendliness.

Also, in the embodiment and the variations 1 to 4, the print data 401 is divided into plural division files 104a and these division files 104a are managed after being hierarchized, but plural print data 401 may be managed after being hierarchized on a print data 401 basis instead of being divided into division files 104a.

### Industrial Applicability

The print control apparatus concerning the present invention provides an effect of making it possible to reduce the time needed for searching files and improve its userfriendliness and can be applied for printers and the like.

## Claims

1. A print control apparatus for controlling a printer engine that prints a content based on a file indicating the content to be printed, comprising:
a storage unit that has an area for storing the file;
a writing unit operable to write the file in said storage unit; and
a file management unit operable to hierarchize files to be written by said writing unit in said storage unit, operable to manage files in a hierarchical form, and operable to search the file based on a resulting hierarchy.

2. The print control apparatus according to Claim 1, further comprising:
an obtainment unit operable to obtain print data indicating the content to be printed from outside said print control apparatus; and
a division unit operable to divide the print data obtained by said obtainment unit into the files,
wherein said writing unit is operable to write the files divided by said division unit in said storage unit.

3. The print control apparatus according to Claim 2,
wherein said division unit is operable to divide the print data on a page-by-page basis and operable to generate a file including information equivalent to each page.

4. The print control apparatus according to Claim 2,
wherein said division unit is operable to divide the print data on an area-by-area basis, the area being smaller than a page, and operable to generate a file including information equivalent to each page.

5. The print control apparatus according to Claim 2,
wherein said file management unit is operable to divide the files to be written in said storage unit into two layers in a hierarchy and operable to manage the files in a hierarchical form by setting one storage area for one print data in said storage unit and by causing said writing unit to write, in the storage area, the files generated from the print data.

6. The print control apparatus according to Claim 2,
wherein said file management unit is operable to divide the files to be written in said storage unit into three layers in the hierarchy and operable to manage the files in a hierarchical form by setting one storage area for one print data in said storage unit and sub-storage areas in the storage area, and by causing said writing unit to write the files generated from the print data in the sub-storage areas in the storage area.

7. The print control apparatus according to Claim 2,
wherein said file management unit is operable to set an upper limit on the number of print data to be written in said storage unit as the files and operable to prohibit said writing unit from writing print data over the upper limit.

8. The print control apparatus according to Claim 2,
wherein said file management unit is operable to selectively use, depending on print data obtained by said obtainment unit, a first management form for hierarchizing and managing the files, and a second management form for hierarchizing and managing the files in a way different from the first management form.

9. The print control apparatus according to Claim 8,
wherein said file management unit is operable to selectively use the first management form and the second management form depending on the number of files composing the print data obtained by said obtainment unit.

10. The print control apparatus according to Claim 9,
wherein said file management unit is operable to selectively use the first management form for dividing the files into two layers in a hierarchy and the second management form for dividing the files into three layers in a hierarchy.

11. The print control apparatus according to Claim 2,
wherein said file management unit is operable to set, in said storage unit, a storage area in which files under a predetermined upper limit are written, and
said file management unit is operable to newly set the storage area, and operable to cause said writing unit to write said files in the new storage area in the case where the number of files written in the storage area reaches the upper limit.

12. The print control apparatus according to Claim 2,
wherein said file management unit is operable to divide the files to be written in said storage unit into two layers in the hierarchy and operable to manage the files in a hierarchical form by setting a storage area for each user in said storage unit and by causing said writing unit to write the file in the storage area of a user who generated the file.

13. A print control method for controlling a printer engine that prints a content based on a file indicating the content to be printed, comprising:
a hierarchization step of hierarchizing files, one of which being the file, and writing files in a memory; and
a search step of searching the file based on a resulting hierarchy.

14. The print control method according to Claim 13, further comprising:
an obtainment step of obtaining print data indicating the content to be printed from outside the print control apparatus; and
a division step of dividing the print data obtained in said obtainment step into the files,
wherein in said hierarchization step, the files divided in said division step are written in the memory.

15. The print control method according to Claim 14,
wherein, in said division step, the print data is divided on a page-by-page basis and a file including information equivalent to each page is generated.

16. The print control method according to Claim 14,
wherein, in said hierarchization step, files to be written in the memory are divided into two layers in a hierarchy by one storage area for one print data being set in the memory and the files generated from the print data being written in the storage area.

17. The print control method according to Claim 14,
wherein, in the hierarchization step, files to be written in the memory are divided into three layers in the hierarchy by one storage area for one print data being set in the memory and sub-storage areas being set in one storage area, and the files generated from the print data being written in the respectively corresponding sub-storage areas in the storage area.

18. The print control method according to Claim 14,
wherein, in said hierarchization step, an upper limit on the number of print data to be written in the memory as files is set and writing print data over the upper limit is prohibited.

19. The print control method according to Claim 14,
wherein, in said hierarchization step, a storage area in which files under a predetermined upper limit are written is set in the memory, and in the case where the number of files written in the storage area reaches the upper limit, the storage area is newly set and writing in the new storage area is performed.

20. A program for controlling a printer engine that prints a content based on a file indicating the content to be printed, the program causing a computer to execute:
a hierarchization step of hierarchizing files, one of which being the file, and writing the files in a memory; and
a search step of searching the file based on a resulting hierarchy.

21. The program according to Claim 20, further comprising:
an obtainment step of obtaining print data indicating the content to be printed from outside the print control apparatus; and
a division step of dividing the print data obtained in said obtainment step into files,
wherein, in said hierarchization step, the files divided in said division step are written in the memory.

22. The program according to Claim 21,
wherein, in said division step,
the print data is divided on a page-by-page basis and a file including information equivalent to each page is generated.

23. The program according to Claim 21,
wherein, in said hierarchization step, files to be written in the memory are divided into two layers in a hierarchy by one storage area for one print data being set in the memory and the files generated from the print data being written in the storage area.

24. The program according to Claim 21,
wherein, in the hierarchization step, files to be written in the memory are divided into three layers in a hierarchy by one storage area for one print data being set in the memory and sub-storage areas being set in one storage area, and the files generated from the print data being written in the respectively corresponding sub-storage areas in the storage area.

25. A printer comprising:
a printer engine for printing a content based on a file indicating the content to be printed; and
a print control apparatus for controlling the printer engine,
wherein said print control apparatus includes:
a storage unit that has an area for storing the file;
a writing unit operable to write the file in said storage unit; and
a file management unit operable to hierarchize files to be written in said storage unit by said writing unit and operable to manage the files in a hierarchical form, and operable to search the file based on a resulting hierarchy.

26. The printer according to Claim 25,
wherein said print control apparatus further includes:
an obtainment unit operable to obtain print data indicating the content to be printed from outside said print control apparatus; and
a division unit operable to divide the print data obtained by said obtainment unit into the files,
said writing unit writes the files divided by said division unit in said storage unit.

27. The printer according to Claim 26,
wherein said division unit is operable to divide the print data on a page-by-page basis and operable to generate a file including information equivalent to each page.

28. The printer according to Claim 26,
wherein said file management unit is operable to divide the files to be written in said storage unit into two layers in a hierarchy and operable to manage the files in a hierarchical form by setting one storage area for one print data in said storage unit and by causing said writing unit to write files generated from the print data in the storage area.

29. The printer according to Claim 26,
wherein said file management unit is operable to divide the files to be written in said storage unit into three layers in a hierarchy and operable to manage the files in a hierarchical form by setting one storage area for one print data in said storage unit and sub-storage areas in the storage area and by causing said writing unit to write the files generated from the print data in the sub-storage areas in the storage area.
